# EUROPEAN PATENT SPECIFICATION

(11) **EP 4 489 177 B1**
(45) Date of publication and mention of the grant of the patent: **16.09.2026**
(21) Application number: 23760268.5
(22) Date of filing: 27.01.2023
(51) Int. Cl.: H01M 50/578, H01M 50/105, H01M 10/42, H01M 50/178, G01B 5/30

(54) **DEVICE FOR DETECTING VENTING OF POUCH CELL**
VORRICHTUNG ZUR ERKENNUNG DER BELÜFTUNG EINER POUCHZELLE
DISPOSITIF DE DÉTECTION DE VENTILATION DE CELLULE DE POCHE

(30) Priority: 28.02.2022 KR 20220026196
(43) Date of publication of application: 08.01.2025
(73) Proprietor: LG Energy Solution, Ltd., Seoul 07335 (KR)
(72) Inventor: KIM, Won Joong, Daejeon 34122 (KR); KIM, Bong Cheol, Daejeon 34122 (KR); PARK, Ki Hong, Daejeon 34122 (KR)
(74) Representative: Goddar, Heinz J.
(86) International application number: PCT/KR2023/001299
(87) International publication number: WO 2023/163394

(56) References cited:
- EP-A1- 3 255 720
- EP-A1- 3 300 139
- EP-B1- 2 850 671
- CN-A- 104 272 493
- CN-U- 215 816 008
- KR-A- 20170 040 919
- KR-A- 20170 050 926
- US-A1- 2014 295 222

## Description

### TECHNICAL FIELD

The present invention relates to a device for detecting venting of a pouch cell, and more particularly, to a device for detecting venting of a pouch cell, which is capable of mechanically detecting the venting of the pouch cell using a change in volume of the pouch cell and immediately cutting off a voltage when the venting occurs.

### BACKGROUND ART

Secondary batteries refer to batteries that are chargeable and dischargeable unlike non-rechargeable primary batteries, and types of the secondary batteries include a nickel-cadmium battery, a nickel-hydrogen battery, a lithium-ion battery, a lithium-ion polymer battery, and so on. Such secondary batteries are applied to and used in not only small-sized products such as digital camera, notebook computer, mobile phone, PDA and e-bike, but also large-sized products, such as electric vehicle and hybrid vehicle, which require higher powers, energy storage systems for storing surplus electricity or new renewable energy, and energy storage systems for backup.

These secondary batteries are classified into a pouch type secondary battery, a can type secondary battery, and so on, according to the material of a battery case that accommodates an electrode assembly. In the pouch type, an electrode assembly is accommodated in a pouch made of a flexible polymer material having a variable shape. In the can type, an electrode assembly is accommodated in a case made of a material such as metal or plastic, which has a fixed shape.

The battery case has the electrode assembly accommodated therein as above and is injected with an electrolyte, and then is sealed so as to operate as a battery. During a charging-discharging of the secondary batteries, gas is generated, and particularly when overcharge of the batteries, an internal short circuit or the like occurs, the gas is excessively generated in the battery case to cause an increase in pressure inside the battery case, and this leads to performance degradation of the batteries.

Thus, a test process or device that performs a venting operation in which inner gas is discharged to the outside is essential for the secondary batteries. However, an occurrence of unexpected venting during an advance safety review and test of a pouch cell may not only cause contaminant of a surrounding test area, but also lead to a risk of accidents caused by, for example, electrolyte leakage and dielectric breakdown, through a venting portion. There is also a case in which outside air flows into the secondary batteries adversely during the venting of the secondary batteries, and in this case, not only the performance of the batteries is degraded, but also reaction of oxygen in the batteries leads ignition or explosion of the batteries to seriously threaten user's safety. Thus, a device is necessary which is capable of immediately measuring the venting and cutting off a voltage during the test of the pouch cell.

Accordingly, in the related art, a gas sensor is used to detect the venting of the pouch cell. However, there are disadvantages that not only the gas sensor is a high-cost product and thus is not preferable economically, but also monitoring by a user is continuously required. Thus, development of a machine and device capable of automatically measuring the venting and operable even without an expensive sensor is required.

EP 3 255 720 A1 discloses a battery module comprising a probe for sensing expansion of a battery cell.

EP 3 300 139 A1 discloses a secondary battery which detects displacement of a gas discharge part to prevent battery cell swelling, a system for charging secondary battery, and a method for manufacturing a secondary battery.

EP 2 850 671 B1 discloses a galvanic element with covering film, an electrochemical storage device, an electrochemical storage system and a method for determining a parameter of an electrochemical storage device.

### DISCLOSURE OF THE INVENTION

### TECHNICAL PROBLEM

The present invention has been devised to solve the problems as above and an object of the present invention is to provide a device for detecting venting of a pouch cell, which is capable of mechanically detecting the venting of the pouch cell using a change in volume of the pouch cell and immediately cutting off a voltage when the venting occurs.

### TECHNICAL SOLUTION

A device for detecting venting of a pouch cell according to Embodiment 1 of the present invention is a device for detecting venting of a pouch cell that includes a pouch case and an electrode lead protruding to one side of the pouch case. The device includes a body part, a rotating means provided on one surface of the body part, a rotary part rotatably coupled to the one surface of the body part by the rotating means and having one side provided with a connection surface that is in contact with the electrode lead, a support provided to face the pouch case at the other side of the rotary part, and a cell pressing block coupled to an end of the support and having a pressing surface that presses an outer surface of the pouch case.

The cell pressing block may transmit pressing force due to an increase in volume of the pouch case to the rotary part through the support, and the rotary part may rotate in a first direction by the pressing force transmitted through the support, wherein connection with the electrode lead may be maintained on the connection surface.

The rotating means may include a first shaft member, which protrudes from the one surface of the body part, and a first torsion spring that couples the first shaft member and the rotary part to each other and supplies torque to the rotary part.

The first torsion spring may transmit torque generated as the rotary part rotates in the first direction to the rotary part, and the rotary part may rotate in a second direction by the torque so that the connection with the electrode lead is released on the connection surface.

The body part may include a lead seating part having a stepped shape so that the electrode lead is seated thereon.

The rotary part may be provided as a conductor.

The rotary part may be provided with a connection terminal connected to an external device at the other side based on the rotating means.

The connection surface may be provided as a curved surface that is convex outward.

The connection surface may be provided to have a radius of curvature that gradually decreases toward a side at which the pouch case is disposed.

The support may be hinge-coupled at the other side of the rotary part.

The cell pressing block may be provided as an insulator.

The pressing surface may be provided as a curved surface that is convex outward.

The device for detecting the venting of the pouch cell may further include a support means that is provided on the one surface of the body part and presses and supports the rotary part on an end of the rotary part in a first direction.

The support means may include a second shaft member that protrudes from the one surface of the body part, a torsion arm that supports the rotary part, and a second torsion spring that couples the second shaft member and the torsion arm to each other and supplies torque to the torsion arm.

In a device for detecting venting of a pouch cell according to Embodiment 2 of the present invention, a support may include a first support, in which a hollow having one side opened is defined, a second support having one side, at which an end is coupled to the cell pressing block, and the other side, at which an end is inserted into the hollow of the first support, and a compression spring inserted into the hollow of the first support, wherein the compression spring is provided between the other side of the first support, which is closed, and the second support to supply elastic force to the second support.

### ADVANTAGEOUS EFFECTS

The device for detecting the venting of the pouch cell according to the present invention is the device for detecting the venting of the pouch cell that includes the pouch case and the electrode lead protruding to the one side of the pouch case. The device may include the body part, the rotating means provided on the one surface of the body part, the rotary part rotatably coupled to the one surface of the body part by the rotating means and having the one side provided with the connection surface that is in contact with the electrode lead, the support provided to face the pouch case at the other side of the rotary part, and the cell pressing block coupled to the end of the support and having the pressing surface that presses the outer surface of the pouch case. Accordingly, the venting of the pouch cell may be mechanically detected using the change in the volume of the pouch cell and the voltage may be immediately cut off when the venting occurs.

### BRIEF DESCRIPTION OF THE DRAWINGS

FIG. 1 is a perspective view illustrating a device for detecting venting of a pouch cell according to Embodiment 1 of the present invention.
FIG. 2 is a side view illustrating a state in which the device for detecting the venting of the pouch cell is mounted on the pouch cell according to Embodiment 1 of the present invention.
FIG. 3 is a perspective view illustrating a body part of the device for detecting the venting of the pouch cell according to Embodiment 1 of the present invention.
FIG. 4 is a perspective view illustrating a rotating means of the device for detecting the venting of the pouch cell according to Embodiment 1 of the present invention.
FIG. 5 is a perspective view illustrating a rotary part of the device for detecting the venting of the pouch cell according to Embodiment 1 of the present invention.
FIG. 6 is an enlarged side view illustrating a cell pressing block and a support of the device for detecting the venting of the pouch cell according to Embodiment 1 of the present invention.
FIG. 7 is a side view illustrating an operation of the device for detecting the venting of the pouch cell according to Embodiment 1 of the present invention before the venting of the pouch cell occurs.
FIG. 8 is a side view illustrating an operation of the device for detecting the venting of the pouch cell according to Embodiment 1 of the present invention after the venting of the pouch cell occurs.
FIG. 9 is a side view illustrating a device for detecting venting of a pouch cell according to Embodiment 2 of the present invention.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

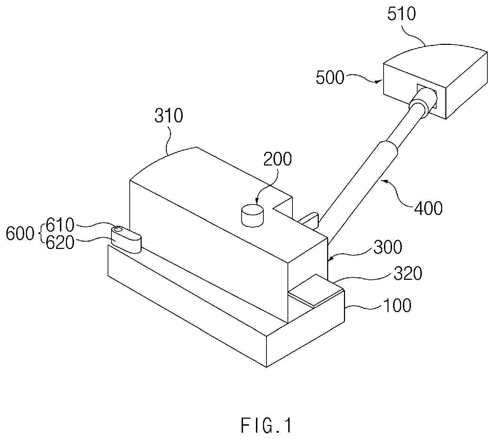

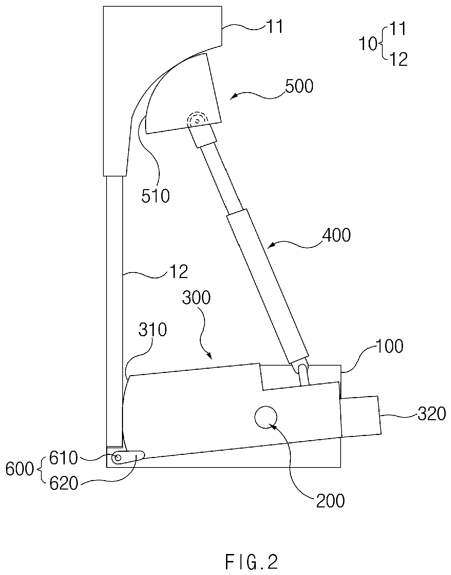

FIG. 1 is a perspective view illustrating a device for detecting venting of a pouch cell according to Embodiment 1 of the present invention. FIG. 2 is a side view illustrating a state in which the device for detecting the venting of the pouch cell is mounted on the pouch cell according to Embodiment 1 of the present invention.

Referring to FIGS. 1 and 2, the device for detecting the venting of the pouch cell according to the present invention is a device for detecting venting of a pouch cell 10 that includes a pouch case 11 and an electrode lead 12 protruding to one side of the pouch case 11. The device includes a body part 100, a rotating means 200, a rotary part 300, a support 400, and a cell pressing block 500.

The rotating means 200 is provide on one surface of the body part 100, and the rotary part 300 is rotatably coupled to the one surface of the body part 100 by the rotating means 200 and has one side provided with a connection surface 310 in contact with the electrode lead 12. The support 400 is provided to face the pouch case 11 at the other side of the rotary part 300, and the cell pressing block 500 is coupled to an end of the support 400 and has a pressing surface 510 that presses an outer surface of the pouch case 11.

In the present invention, as the cell pressing block 500 presses the outer surface of the pouch case 11 as above, movement of each of the cell pressing block 500 and the support 400 occurs according to a change in volume of the pouch cell 10, and it causes rotation of the rotary part 300 coupled to the support 400. Consequently, the change in volume of the cell may be used to mechanically detect the venting of the pouch cell 10, and when the venting occurs, connection of the rotary part 300 and the electrode lead 12 may be released to immediately cut off a voltage.

Hereinafter, each of components of the device for detecting the venting of the pouch cell will be descried in detail with reference to FIGS. 2 to 6.

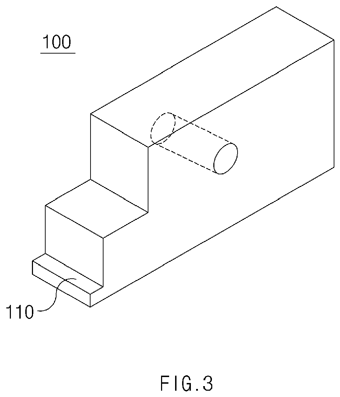

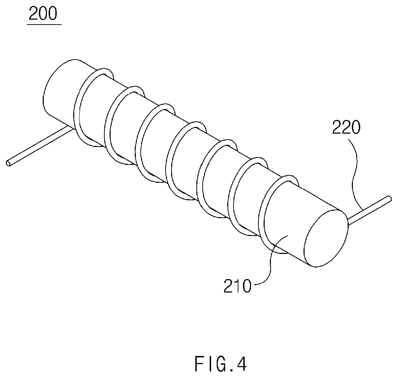

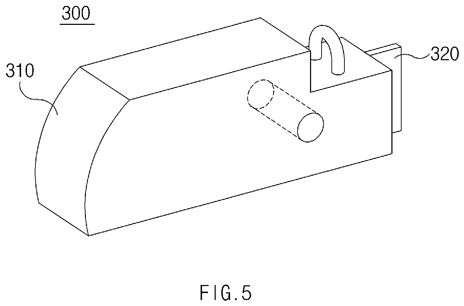

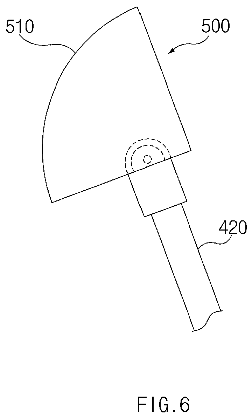

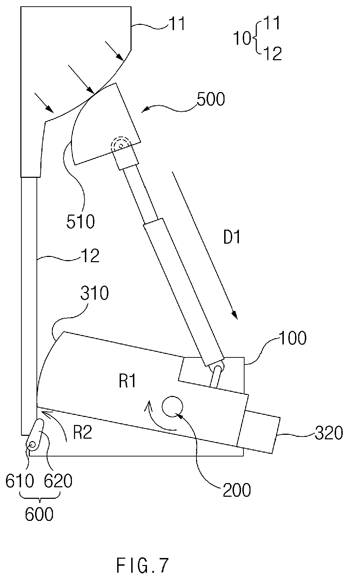

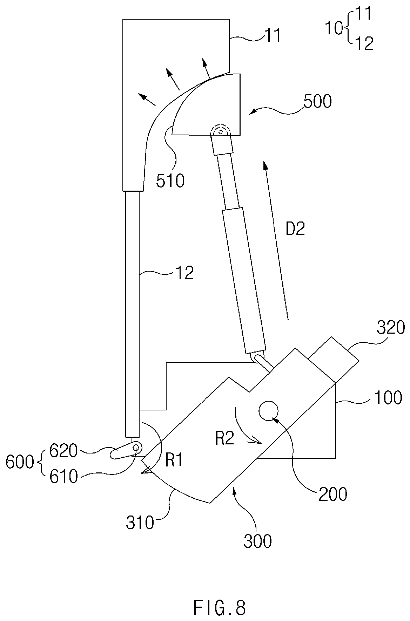

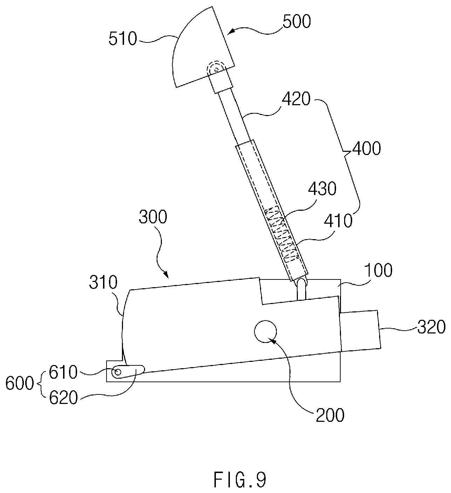

FIG. 3 is a perspective view illustrating a body part of the device for detecting the venting of the pouch cell according to Embodiment 1 of the present invention. FIG. 4 is a perspective view illustrating a rotating means of the device for detecting the venting of the pouch cell according to Embodiment 1 of the present invention. FIG. 5 is a perspective view illustrating a rotary part of the device for detecting the venting of the pouch cell according to Embodiment 1 of the present invention. FIG. 6 is an enlarged side view illustrating a cell pressing block and a support of the device for detecting the venting of the pouch cell according to Embodiment 1 of the present invention. FIG. 7 is a side view illustrating an operation of the device for detecting the venting of the pouch cell according to Embodiment 1 of the present invention before the venting of the pouch cell occurs. FIG. 8 is a side view illustrating an operation of the device for detecting the venting of the pouch cell according to Embodiment 1 of the present invention after the venting of the pouch cell occurs. FIG. 9 is a side view illustrating a device for detecting venting of a pouch cell according to Embodiment 2 of the present invention.

First, referring to FIGS. 2 and 3, the body part 100, which is a component serving as a center of the device for detecting the venting of the pouch cell, may be a component to which each of the rotating means 200 and the rotary part 300 is coupled, and also may be a component to be mounted in a cycle chamber, a high-temperature storage chamber, or a die in a test process in which the device for detecting the venting of the pouch cell according to the present invention is used. However, the device for detecting the venting of the pouch cell according to the present invention is not necessarily used in the test process, and may be mounted in a secondary battery module and detect the venting of the pouch cell 10 during the use thereof.

The shape of the body part 100 is not particularly limited. However, the body part 100 may have a shape having at least one flat surface so that the rotary part 300 is easily rotatable in a coupled state, and may be provided in a shape in which a coupling hole to which the rotating means 200 is coupled passes through the one surface or the one surface and the other surface.

The body part 100 may have one side that includes a lead seating part 110 having a stepped shape so that the electrode lead 12 is seated thereon. Accordingly, connection with the rotary part 300 may be easily maintained or released in a state in which the electrode lead 12 is stably seated on the one side of the body part 100. There is no limitation in step height of the lead seating part 110. Preferably, however, the step height and width may be provided to be the same as a height and width of the electrode lead 12 or greater than the height and width of the electrode lead 12 for the electrode lead 12 to be stably seated.

Next, a structure of each of the rotating means 200, the rotary part 300, the support 400, and the cell pressing block 500, and an operation of the device for detecting the venting of the pouch cell 10 according to an operation of each of the components will be reviewed.

Referring to FIGS. 2 and 4, the rotating means 200, which is provided on the one surface of the body part 100, may be a component that fixes the rotary part 300 to the body part 100, and also may be a component that rotates the rotary part 30 in a first direction or in a second direction opposite to the first direction. Here, the first direction may mean a clockwise direction in FIG. 2, and the second direction may mean a counterclockwise direction in FIG. 2. The rotating means 200 may include a first shaft member 210 and a first torsion spring 220. The first shaft member 210 may be coupled to protrude from the one surface of the body part 100, and the first torsion spring 220 may couple the first shaft member 210 and the rotary part 300 to each other and supply torque to the rotary part 300. Here, the torque may be force generated by elastic force of the first torsion spring 220. In the first torsion spring 220 of the rotating means 200, when the rotary part 300 rotates by pressing force transmitted by the cell pressing block 500 and the support 400, torque may be generated by torsion and the rotary part 300 may rotate by the torque. An operation of the rotary part 300 by the rotating means 200 will be described in more detail below.

The first torsion spring 220 may be provided to have a shape surrounding an outer circumference of the first shaft member 210, but is not necessarily limited thereto. For example, the first torsion spring 220 may have a configuration in which the first shaft member 210 is provided as a hollow and the first torsion spring is inserted into the hollow.

Next, as illustrated in FIGS. 2 and 5, the rotary part 300 is a component, which is rotatably coupled to the one surface of the body part 100 by the rotating means 200, and is a component that is connected to the electrode lead 12 or released from the connection so as to maintain or cut off a voltage. To this end, the rotary part 300 may be provided as a conductor.

In the rotary part 300, the connection surface 310 that is in contact with the electrode lead 12 may be provided at one side based on a position of the rotating means 200 connected to the rotary part 300, and a connection terminal 320 connected to an external device may be provided at the other side based on the rotating means 200. Here, the external device may mean a current or voltage measuring device. When the connection of the rotary part 300 and the electrode lead 12 is released on the connection surface 310 by the rotation, the voltage may be cut off, and the external device connected to the connection terminal 320 may detect whether the venting occurs.

The connection surface 310 may be provided as a curved surface that is convex outward. The rotary part 300 is a component that rotates in the first direction or the second direction, and the connection surface 310 is a surface that is connected to the electrode lead 12 in the rotary part 300. Thus, the connection surface 310 may be provided as a curved surface that is convex outward, in order to maintain the connection with the electrode lead 12 even when the rotary part 300 rotates at a predetermined angle. In addition, the connection surface 310 needs to be provided as a curved surface in order to minimize damage of the electrode lead 12.

In addition, the connection surface 310 may be provided to have a radius of curvature that gradually decreases toward a side at which the pouch case 11 is disposed. That is, the curved surface of the connection surface 310 may be provided to be asymmetric, not to have a constant radius of curvature. A case in which the rotary part 300 rotates in the first direction is in a state in which the pouch case 11 swells up and before venting occurs, and thus, the connection of the connection surface 310 and the electrode lead 12 needs to be maintained. Here, the first direction may mean a direction in which the rotary part 300 rotates to the side at which the pouch case 11 is disposed. When the connection surface 310 is provided so that the radius of curvature of the connection surface 310 gradually decreases toward the side, at which the pouch case 11 is disposed, and the radius of curvature gradually increases toward a side opposite to the side at which the pouch case 11 is disposed, the connection of the connection surface 310 and the electrode lead 12 may be maintained even when the rotary part 300 rotates at a predetermined angle in the first direction, and the connection of the connection surface 310 and the electrode lead 12 may be released when the rotary part 300 rotates at the same angle as the predetermined angle in the second direction.

Referring to FIGS. 2 and 6, the support 400 may be provided to face the pouch case 11 at the other side of the rotary part 300, connect the cell pressing block 500 and the rotary part 300 to each other, and transmit the pressing force transmitted from the cell pressing block 500 to the rotary part 300 or transmit the torque generated from the rotary part 300 or the rotating means 200 to the cell pressing block 500. The support 400 may be hinge-coupled at the other side of the rotary part 300, and accordingly, the pressing force and the torque generated in various directions may be transmitted to the rotary part 300 or the cell pressing block 500 with minimized losses thereof. In addition, as illustrated in FIG. 6, the support 400 may be hinge-coupled to the cell pressing block 500, and the losses of the pressing force and the torque may be minimized.

Next, as illustrated in FIG. 2, the cell pressing block 500 is a component that presses the outer surface of the pouch case 11, and, in detail, the pressing surface 510 provided as a curved surface that is convex outward may press the outer surface of the pouch case 11. Accordingly, the cell pressing block 500 may effectively transmit the pressing force due to a change in volume of the pouch, and damage of the pouch case 11 may be minimized even when the cell pressing block 500 is in contact with the pouch case 11.

As the cell pressing block 500 is a component that transmits only the pressing force due to a change in volume of the pouch case 11, the cell pressing block 500 may be provided as an insulator.

Hereinafter, operating of the device for detecting the venting of the pouch cell according to the present invention will be described in detail with reference to FIGS. 7 and 8.

During a charging or discharging of the pouch cell 10, gas is generated by a reaction between an electrode and an electrolyte inside the cell, and, in this case, the pouch case 11 swells up and the volume of the pouch cell 10 increases. Here, as the pressing surface 510 of the cell pressing block 500 presses the outer surface of the pouch case 11, the cell pressing block 500 may transmit the pressing force, at which the pouch cell 10 presses the cell pressing block 500 by the increase in volume of the pouch case 11, to the rotary part 300 through the support 400 in a direction D1, and the rotary part 300 may rotate in a first direction R1 by the pressing force transmitted through the support 400. Even when the rotary part 300 rotates in the first direction R1, the connection with the electrode lead 12 may be still maintained on the connection surface 310 of the rotary part 300. That is, that the pouch case 11 swells up to cause the increase in volume of the pouch cell 10 is a state before the venting of the pouch cell 10 occurs. Thus, even when the rotary part 300 rotates by the pressing force, the rotary part 300 has to exist in a state, in which the connection with the electrode lead 12 is maintained, and the voltage is not cut off. Meanwhile, when the rotary part 300 rotates, torque in a second direction R2 is generated by elasticity of the first torsion spring 220 described above, but the rotary part 300 may rotate in the first direction R1 because the pressing force due to the increase in volume of the pouch case 11 is greater than the torque.

However, when the venting occurs, the volume of the pouch cell 10 is rapidly reduced, and the swollen pouch case 11 is reduced in volume. Accordingly, the pressing force transmitted to the cell pressing block 500 is also rapidly reduced, and the magnitude of the torque in the second direction generated by the rotation of the rotary part 300 in the first direction becomes greater than that of the pressing force.

Thus, the first torsion spring 220 of the rotating means 200 may transmit the torque generated as the rotary part 300 rotates in the first direction to the rotary part 300, and as the rotary part 300 rotates in the second direction by the torque, the connection with the electrode lead 12 may be released on the connection surface 310. Here, the connection with the electrode lead 12 being released means that venting occurs in the pouch cell 10, and may means that the rotary part 300 provided as a conductor is spaced apart from the electrode lead 12 so that connection is electrically released to cut off the voltage.

As above, the device for detecting the venting of the pouch cell according to the present invention may rotate in the first direction or second direction based on the magnitude of each of the pressing force due to the increase or decrease in volume of the pouch case 11 and the torque of the first torsion spring 220, so that the connection of the connection surface 310 of the rotary part 300 and the electrode lead 12 is maintained or released to mechanically detect the venting of the pouch and cut off the voltage. When compared to an expensive gas sensor or the like, the device for detecting the venting of the pouch cell according to the present invention may be economical, and the likelihood of malfunction may be significantly reduced to more exactly detect the venting and automatically cut off the voltage so as to secure safety during the test of the pouch cell 10.

Referring to FIGS. 2, 7 and 8, the device for detecting the venting of the pouch cell according to the present invention may further include a support means 600 that is provided on the one surface of the body part 100 and presses and supports the rotary part 300 on an end of the rotary part 300 in the first direction. Here, the support means 600 pressing the rotary part 300 in the first direction may mean that the support means 600 presses the rotary part 300 so that, in order to prevent the rotary part 300 from rotating in a direction in which the connection with the electrode lead 12 is released or in a direction that is away from the pouch case 11, the pressing is performed in a direction opposite to the foregoing direction. That is, in a case except when the venting occurs, the support means 600 may prevent the connection of the connection surface 310 of the rotary part 300 and the electrode lead 12 from being released by the rotation of the rotary part 300 in the second direction so as to reduce the risk of the malfunction of the device.

The support means 600 may include a second shaft member 610 that protrudes from the one surface of the body part 100, a torsion arm 620 that supports the rotary part 300, and a second torsion spring that couples the second shaft member 610 and the torsion arm 620 to each other and supplies torque to the torsion arm 620. Accordingly, the rotary part 300 may be prevented from rotating in the second direction before the venting occur.

### Embodiment 2

Embodiment 2 of the present invention is different from Embodiment 1 in that the support 400 according to Embodiment 1 is constituted by a first support 410 and a second support 420 and further includes a compression spring 430 provided between the first support 410 and the second support 420. Thus, the other components of a device for detecting venting of a pouch cell may be understood as the same as those described above in Embodiment 1 and illustrated in the drawings, and also resultant effects may be expected to be the same.

FIG. 9 is a side view illustrating a device for detecting venting of a pouch cell according to Embodiment 2 of the present invention.

Referring to FIG. 9, a support 400 according to Embodiment 2 of the present invention may include the first support 410, the second support 420, and the compression spring 430. A hollow having one side opened may be defined in the first support 410. The second support 420 may have one side, at which an end is coupled to a cell pressing block 500, and the other side at which an end is inserted into the hollow of the first support 410. The compression spring 430 may be inserted into the hollow of the first support 410 and provided between the other side of the first support 410, which is closed, and the second support 420 to supply elastic force to the second support 420.

When the volume of a pouch case increases, a rotary part 300 rotates in the first direction by pressing force transmitted to the cell pressing block 500 and the support 400. Here, the compression spring 430 may be also compressed between the first support 410 and the second support 420, and as the pressing force is reduced when the venting occurs instantaneously, torque at which the rotary part 300 rotates in the second direction is obtained by the elastic force of the compression spring 430.

By including the compression spring 430 between the first support 410 and the second support 420 as above, the device for detecting the venting of the pouch cell according to Embodiment 2 of the present invention may additionally obtain the torque by the linear elastic force of the compression spring 430 in addition to the torque of the first torsion spring 220, and rapidly detect venting simultaneously with an occurrence of the venting and cut off a voltage.

### [Description of the Symbols]

- 10:: Pouch cell
- 11:: Pouch case
- 12:: Electrode lead
- 100:: Body part
- 110:: Lead seating part
- 200:: Rotating means
- 210:: First shaft member
- 220:: First torsion spring
- 300:: Rotary part
- 310:: Connection surface
- 320:: Connection terminal
- 400:: Support
- 410:: First support
- 420:: Second support
- 430:: Compression spring
- 500:: Cell pressing block
- 510:: Pressing surface
- 600:: Support means
- 610:: Second shaft member
- 620:: Torsion arm

## Claims

1. A device for detecting venting of a pouch cell (10) that comprises a pouch case (11) and an electrode lead (12) protruding to one side of the pouch case (11), the device comprising:
a body part (100);
a rotating means (200) provided on one surface of the body part (100);
a rotary part (300) rotatably coupled to the one surface of the body part (100) by the rotating means (200) and having one side provided with a connection surface (310) that is in contact with the electrode lead (12);
a support (400) provided to face the pouch case (11) at the other side of the rotary part (300); and
a cell pressing block (500) coupled to an end of the support (400) and having a pressing surface (510) configured to press an outer surface of the pouch case (11).

2. The device of claim 1, wherein the cell pressing block (500) transmits pressing force due to an increase in volume of the pouch case (11) to the rotary part (300) through the support (400), and
the rotary part (300) rotates in a first direction by the pressing force transmitted through the support (400), wherein connection with the electrode lead (12) is maintained on the connection surface (310).

3. The device of claim 2, wherein the rotating means (200) comprises:
a first shaft member (210) protruding from the one surface of the body part (100); and
a first torsion spring (220) configured to couple the first shaft member (210) and the rotary part (300) to each other and supply torque to the rotary part (300).

4. The device of claim 3, wherein the first torsion spring (220) transmits torque generated as the rotary part (300) rotates in the first direction to the rotary part (300), and
the rotary part (300) rotates in a second direction by the torque so that the connection with the electrode lead (12) is released on the connection surface (310).

5. The device of claim 1, wherein the body part (100) comprises a lead seating part (110) having a stepped shape so that the electrode lead (12) is seated thereon.

6. The device of claim 1, wherein the rotary part (300) is provided as a conductor.

7. The device of claim 1, wherein the rotary part (300) is provided with a connection terminal (320) connected to an external device at the other side based on the rotating means (200).

8. The device of claim 1, wherein the connection surface (310) is provided as a curved surface that is convex outward.

9. The device of claim 8, wherein the connection surface (310) is provided to have a radius of curvature that gradually decreases toward a side at which the pouch case (11) is disposed.

10. The device of claim 1, wherein the support (400) is hinge-coupled at the other side of the rotary part (300).

11. The device of claim 1, wherein the cell pressing block (500) is provided as an insulator.

12. The device of claim 1, wherein the pressing surface (510) is provided as a curved surface that is convex outward.

13. The device of claim 1, further comprising a support means (600) provided on the one surface of the body part (100) and configured to press and support the rotary part (300) on an end of the rotary part (300) in a first direction.

14. The device of claim 13, wherein the support means (600) comprises:
a second shaft member (610) protruding from the one surface of the body part (100);
a torsion arm (620) configured to support the rotary part (300); and
a second torsion spring configured to couple the second shaft member (610) and the torsion arm (620) to each other and supply torque to the torsion arm (620).

15. The device of claim 1, wherein the support (400) comprises:
a first support (410) in which a hollow having one side opened is defined;
a second support (420) having one side, at which an end is coupled to the cell pressing block (500), and the other side, at which an end is inserted into the hollow of the first support (410); and
a compression spring (430) inserted into the hollow of the first support (410), wherein the compression spring (430) is provided between the other side of the first support (410), which is closed, and the second support (420) to supply elastic force to the second support (420).

## Patentansprüche

1. Vorrichtung zum Detektieren der Entlüftung einer Beutelzelle (10), die ein Beutelgehäuse (11) und eine Elektrodenleitung (12), die zu einer Seite des Beutelgehäuses (11) vorsteht, umfasst, wobei die Vorrichtung umfasst:
einen Körperteil (100);
ein Drehmittel (200), das auf einer Oberfläche des Körperteils (100) bereitgestellt ist;
einen Drehteil (300), der durch das Drehmittel (200) drehbar mit der einen Oberfläche des Körperteils (100) gekoppelt ist und eine Seite aufweist, die mit einer Verbindungsoberfläche (310) bereitgestellt ist, die mit der Elektrodenleitung (12) in Kontakt steht;
einen Träger (400), der bereitgestellt ist, um dem Beutelgehäuse (11) auf der anderen Seite des Drehteils (300) zugewandt zu sein; und
einen Zellenpressblock (500), der mit einem Ende des Trägers (400) gekoppelt ist und eine Pressoberfläche (510) aufweist, die konfiguriert ist, um eine äußere Oberfläche des Beutelgehäuses (11) zu pressen.

2. Vorrichtung nach Anspruch 1, wobei der Zellenpressblock (500) eine Presskraft aufgrund einer Volumenzunahme des Beutelgehäuses (11) durch den Träger (400) auf den Drehteil (300) überträgt, und
der Drehteil (300) sich durch die Presskraft, die durch den Träger (400) übertragen wird, in eine erste Richtung dreht, wobei die Verbindung mit der Elektrodenleitung (12) auf der Verbindungsoberfläche (310) aufrechterhalten wird.

3. Vorrichtung nach Anspruch 2, wobei das Drehmittel (200) umfasst:
ein erstes Wellenelement (210), das von der einen Oberfläche des Körperteils (100) vorsteht; und
eine erste Torsionsfeder (220), die konfiguriert ist, um das erste Wellenelement (210) und den Drehteil (300) miteinander zu koppeln und dem Drehteil (300) ein Drehmoment zuzuführen.

4. Vorrichtung nach Anspruch 3, wobei die erste Torsionsfeder (220) ein Drehmoment, das erzeugt wird, wenn sich der Drehteil (300) in die erste Richtung dreht, auf den Drehteil (300) überträgt, und
der Drehteil (300) sich durch das Drehmoment in eine zweite Richtung dreht, so dass die Verbindung mit der Elektrodenleitung (12) auf der Verbindungsoberfläche (310) gelöst wird.

5. Vorrichtung nach Anspruch 1, wobei der Körperteil (100) einen Leitungssitzteil (110) umfasst, der eine abgestufte Form aufweist, so dass die Elektrodenleitung (12) darauf sitzt.

6. Vorrichtung nach Anspruch 1, wobei der Drehteil (300) als ein Leiter bereitgestellt ist.

7. Vorrichtung nach Anspruch 1, wobei der Drehteil (300) mit einem Verbindungsanschluss (320) bereitgestellt ist, der auf der anderen Seite basierend auf dem Drehmittel (200) mit einer externen Vorrichtung verbunden ist.

8. Vorrichtung nach Anspruch 1, wobei die Verbindungsfläche (310) als eine gekrümmte Fläche bereitgestellt ist, die nach außen konvex ist.

9. Vorrichtung nach Anspruch 8, wobei die Verbindungsfläche (310) bereitgestellt ist, um einen Krümmungsradius aufzuweisen, der zu einer Seite, an der das Beutelgehäuse (11) angeordnet ist, allmählich abnimmt.

10. Vorrichtung nach Anspruch 1, wobei der Träger (400) an der anderen Seite des Drehteils (300) scharniergekoppelt ist.

11. Vorrichtung nach Anspruch 1, wobei der Zellenpressblock (500) als ein Isolator bereitgestellt ist.

12. Vorrichtung nach Anspruch 1, wobei die Pressfläche (510) als eine gekrümmte Fläche bereitgestellt ist, die nach außen konvex ist.

13. Vorrichtung nach Anspruch 1, ferner umfassend ein Trägermittel (600), das auf der einen Oberfläche des Körperteils (100) bereitgestellt ist und konfiguriert ist, um den Drehteil (300) an einem Ende des Drehteils (300) in eine erste Richtung zu pressen und zu tragen.

14. Vorrichtung nach Anspruch 13, wobei das Trägermittel (600) umfasst:
ein zweites Wellenelement (610), das von der einen Oberfläche des Körperteils (100) vorsteht;
einen Torsionsarm (620), der konfiguriert ist, um den Drehteil (300) zu tragen; und
eine zweite Torsionsfeder, die konfiguriert ist, um das zweite Wellenelement (610) und den Torsionsarm (620) miteinander zu koppeln und dem Torsionsarm (620) ein Drehmoment zuzuführen.

15. Vorrichtung nach Anspruch 1, wobei der Träger (400) umfasst:
einen ersten Träger (410), in dem ein Hohlraum mit einer geöffneten Seite definiert ist;
einen zweiten Träger (420) mit einer Seite, an der ein Ende mit dem Zellenpressblock (500) gekoppelt ist, und der anderen Seite, an der ein Ende in den Hohlraum des ersten Trägers (410) eingesetzt ist; und
eine Druckfeder (430), die in den Hohlraum des ersten Trägers (410) eingesetzt ist, wobei die Druckfeder (430) zwischen der anderen Seite des ersten Trägers (410), die geschlossen ist, und dem zweiten Träger (420) bereitgestellt ist, um dem zweiten Träger (420) eine elastische Kraft zuzuführen.

## Revendications

1. Dispositif pour détecter la ventilation d'une cellule de poche (10) comprenant un étui de poche (11) et un conducteur d'électrode (12) dépassant d'un côté de la cellule de poche (11), le dispositif comprenant :
une partie de corps (100) ;
un élément de rotation (200) agencé sur une surface de la partie de corps (100) ;
une partie rotative (300) couplée en rotation à l'une surface de la partie du corps (100) par l'élément de rotation (200) et dont un côté est doté d'une surface de connexion (310) située au contact du conducteur d'électrode (12) ;
un support (400) agencé pour faire face à l'étui de poche (11) à l'autre bout de la partie rotative (300) ; et
un bloc de pressage de cellule (500) couplé à une bout du support (400) et possédant une surface de pressage (510) configurée pour presser une surface extérieure de l'étui de poche (11).

2. Dispositif selon la revendication 1, le bloc de pressage de cellule (500) transmettant une force en raison d'une augmentation du volume de l'étui de poche (11) sur la partie rotative (300) à travers le support (400), et
la partie rotative (300) tournant dans une première direction par la force de pression transmise à travers le support (400), la connexion avec le conducteur d'électrode (12) étant maintenue sur la surface de connexion (310).

3. Dispositif selon la revendication 2, l'élément de rotation (200) comprenant :
un premier élément d'arbre (210) dépassant de l'une surface de la partie du corps (100) ; et
un premier ressort de torsion (220) configuré pour coupler le premier élément d'arbre (210) et la partie rotative (300) l'un à l'autre et délivrer un couple à la partie rotative (300).

4. Dispositif selon la revendication 3, le premier ressort de torsion (220) transmettant le couple généré, lors de la rotation de la partie rotative (300) dans la première direction, à la partie rotative (300), et
la partie rotative (300) tourne dans une seconde direction sous l'effet du couple afin que la connexion avec le conducteur d'électrode (12) soit libérée sur la surface de connexion (310).

5. Dispositif selon la revendication 1, la partie du corps (100) comprenant une pièce d'assise du conducteur (110) avec une forme étagée de sorte que le conducteur d'électrode (12) soit installé dessus.

6. Dispositif selon la revendication 1, la partie rotative (300) étant agencée comme un conducteur.

7. Dispositif selon la revendication 1, la partie rotative (300) étant agencée avec une borne de connexion (320) connectée à un dispositif externe de l'autre côté en fonction de l'élément de rotation (200).

8. Dispositif selon la revendication 1, la surface de connexion (310) étant agencée comme une surface courbe convexe vers l'extérieur.

9. Dispositif selon la revendication 8, la surface de connexion (310) étant agencée de façon à posséder un rayon de courbure diminuant progressivement vers un côté sur lequel l'étui de poche (11) est disposé.

10. Dispositif selon la revendication 1, le support (400) étant couplé de façon articulée sur l'autre côté de la partie rotative (300).

11. Dispositif selon la revendication 1, le bloc de pressage de cellule (500) étant agencé en tant qu'isolant.

12. Dispositif selon la revendication 1, la surface de pressage (510) étant agencée comme une surface courbe convexe vers l'extérieur.

13. Dispositif selon la revendication 1, comprenant en outre un dispositif de support (600) agencé sur l'une surface de la partie du corps (100) et configuré pour presser et supporter la partie rotative (300) sur un bout de la partie rotative (300) dans une première direction.

14. Dispositif selon la revendication 13, le dispositif de support (600) comprenant:
un deuxième élément d'arbre (610) dépassant de l'une surface de la partie du corps (100) ;
un bras de torsion (620) configuré pour supporter la partie rotative (300) ; et
un deuxième ressort de torsion configuré pour coupler l'un à l'autre le deuxième élément d'arbre (610) et le bras de torsion (620), et délivrer un couple au bras de torsion (620).

15. Dispositif selon la revendication 1, le support (400) comprenant:
un premier support (410) dans lequel est défini un creux avec un côté ouvert ;
un deuxième support (420) possédant un côté, où un bout est accouplé au bloc de pressage de cellule (500), et l'autre côté, où un bout est inséré dans le creux du premier support (410) ; et
un ressort de compression (430) inséré dans le creux du premier support (410), le ressort de compression (430) étant agencé entre l'autre côté du premier support (410), qui est fermé, et le deuxième support (420) pour fournir une force élastique au deuxième support (420).
